# EUROPEAN PATENT SPECIFICATION

(11) **EP 1 673 940 B1**
(45) Date of publication and mention of the grant of the patent: **24.08.2011**
(21) Application number: 04794318.8
(22) Date of filing: 07.10.2004
(51) Int. Cl.: H04N 7/24, H04N 7/173, H04N 5/783, G11B 27/10, H04N 7/18

(54) **DIGITAL VIDEO RECORDING AND PLAYBACK SYSTEM WITH QUALITY OF SERVICE PLAYBACK FROM MULTIPLE LOCATIONS VIA A HOME AREA NETWORK**
DIGITALES VIDEOAUFZEICHNUNGS- UND WIEDERGABESYSTEM MIT DIENSTQUALITÄT-WIEDERGABE VON MEHREREN ORTEN ÜBER EIN HAUSNETZWERK
SYSTEME D'ENREGISTREMENT ET DE LECTURE VIDEO NUMERIQUE AVEC LECTURE EN QUALITE DE SERVICE DEPUIS PLUSIEURS EMPLACEMENTS PAR L'INTERMEDIAIRE D'UN RESEAU DOMESTIQUE

(30) Priority: 07.10.2003 US 509378 P
(43) Date of publication of application: 28.06.2006
(73) Proprietor: Ucentric Holdings, Inc., Maynard, MA 01754 (US)
(72) Inventor: KACZOWKA, Peter, A., Townsend, MA 01469 (US); SPARRELL, Carlton, J., Marblehead, MA 01945 (US)
(74) Representative: McLeish, Nicholas Alistair Maxwell
(86) International application number: PCT/US2004/032919
(87) International publication number: WO 2005/036884

(56) References cited:
- WO-A-02/19249
- WO-A-03/025726
- US-A1- 2002 019 984
- US-A1- 2002 194 608

## Description

### BACKGROUND OF THE INVENTION.

### I. Field of the Invention

The present invention broadly relates to digital recording and playback systems and methods that are administered by home area networks. More particularly, the present invention relates to improving cooperative functionality with trick-play playback among individual receivers in a home area network with limited network bandwidth.

### II. Background

Digital Video Recording and Playback systems are becoming more commonplace, with advances in technology and a downward trend in prices. Along with a playback quality that is superior to analog-based systems, Digital Video Recorders ("DVR") also support other features that are not practical with analog-based systems. Among such features is the ability of a DVR user to engage in "live-pause" or "elastic" recording and playback.

Live-pause recording and playback allows a DVR viewer/user to watch a program live while the program is being simultaneously recorded, and also allows the user to use "trick play" modes or functions such as pausing the program or rewinding the program. For example, while the recorded program is being paused or rewound, the system continues to record the program in a buffer memory. The system keeps track of where in memory the user has exited in order to perform trick play functions. The user can later return to the point of viewing in the program where the user had exited, or skip with a "fast forward" operation up to the most current point of recording. Live-pause recording and playback allows the user the flexibility of live program viewing, viewing previously recorded programming, or a combination of both live and previously recorded programming, along with other interesting trick play modes.

Home Area Networks ("HAN") are typically small-scale electronic cable, wire or wireless-based communication networks used to interconnect a variety of small to moderate-sized appliances, computers, and consumer-electronic devices. Their cost and attributes make HANs especially suitable for typical homes or smaller buildings. Communication between devices on a HAN may be via one or more of several well-known protocols or information formats. HANs can be general in their functionality, such as controlling the operation of several in-home devices such as appliances, television receivers, telephonic devices and burglar alarm systems, or they may be more specialized in their functionality, such as only controlling the operation of several television receivers, and connecting the receivers to a television program source outside the home such as a cable or satellite television service provider.

A well-designed and well-implemented HAN can allow resource sharing between one or more workhorse devices, such as media servers, media gateways, and set-top boxes, and the several attached devices, giving the attached devices greater capability and functionality than they would otherwise possess.

Using home area-networked video-recording and playback systems that include multiple television receivers or reproduction devices, the capability of playback of the same program from different receivers or reproduction devices is desirable. Also desirable is the ability to allow live-pause playback and delayed viewing playback from more than one receiver or reproduction device. Further, it is desirable to provide a mechanism for allowing a user to control the speed of playback, including one or more fast-forward and fast-reverse playback modes. Further, it is desirable to provide a mechanism to determine the specific advertisement inserted in the playback of a program based on the context of the playback including location of the receiver (for example, which room of the house), the time of the playback, or the individual controlling the playback.

A Quality of Services ("QoS") device is one that is capable, in order to comply with bandwidth limitations of a network, of limiting the transmission rate it uses for transmission or reception over the network. A QoS device may be capable of negotiating with a system resource manager for varying amounts of bandwidth. Typical QoS devices include newer digital television receivers and newer digital audio receivers that are specially designed to better facilitate video and audio information traffic over HANs and similar types of networks, either between devices and a media server, or directly between two devices. A fully operational HAN often has bandwidth limitations which limit the rate of data that may be transmitted between devices on the network. A given network arrangement might have sufficient bandwidth to play a certain number of audio-visual ("AV") programs at a normal or customary playback rate, but the additional data transmission requirements of a fast-forward or fast-reverse operation may exceed the capacity of the network, potentially resulting in degradation of such fast playback.

What is of interest is a HAN-based system that both (i) supports quality of service communications to efficiently distribute time-sensitive digital video and/or audio information to playback devices, and (ii) allows fast-forward and/or fast-reverse playback of digital video and/or audio information in a manner that satisfies a constraint on the allocation of bandwidth, without excessive degradation of the displayed playback image compared to the case of playback at or near normal speed.

US 2002/0194608 describes a multimedia playback system with a 'Say Again' controller that allows backup and replay of multimedia content.

US 2002/0019984 describes a headend cherry picker with digital video recording capability that can decompress and display compressed streaming video.

WO 02/19249 describes a method for identifying histogram data associated with multimedia content and transmitting the multimedia content at a specified bit rate based on the histogram data.

WO 03/025726 describes a centralized resource manager for managing distributed resources on a network.

### SUMMARY OF THE INVENTION

In an embodiment of the present invention, a bandwidth allocation for a streamof AV data is received. For example, a centralized resource manager may assign a bandwidth allocation for streaming a program containing AV data to a display device of the HAN and send this bandwidth allocation to a media server of the HAN. A user request for a fast rendering of the streamof AV data is received, including a speed factor. For example, the media server may receive the user request from a remote control device that is associated with the device display of the HAN. A fast playback frame sequence associated with the streamof AV data based on the bandwidth allocation and the user request is then determined. The streamof AV data may then be transmitted in accordance with the determined fast playback sequence.

Other embodiments of the invention, including apparatus, computer-readable storage medium and embedded-signal embodiments, are discussed in or made apparent by the following disclosure.

### BRIEF DESCRIPTION OF THE DRAWING FIGURES

Features and advantages of the present invention will become apparent to those skilled in the art from the description below, with reference to the following drawing figures, in which:
FIG. 1 is a schematic block diagram illustrating an example Home Area Network that may be used with embodiments of the invention;
FIG. 2 is a schematic block diagram illustrating another example of a Home Area Network that may be used with embodiments of the invention;
FIG. 3 is a schematic block diagram illustrating another example of a Home Area Network that may be used with embodiments of the invention.
FIG. 4 is a schematic block diagram illustrating an example media server and an example destination or reproduction device that may be used in embodiments of the invention.
FIG. 5 illustrates an example of deletion or replacement of a frame sequence in an audio-visual data stream that may be used in embodiments of the invention.
FIG. 6 illustrates another example of deletion or replacement of a frame sequence in an audio-visual data stream that may be used in embodiments of the invention.
FIG. 7 is a graph showing video stream bandwidths.
FIG. 8 illustrates an example embodiment of a method of the present invention.
FIG. 9 illustrates in greater detail a step in the example embodiment shown in FIG. 8.
FIG. 10 illustrates additional steps that may be performed in a variation of the embodiments shown in FIGS. 8-9.
FIG. 11 illustrates a computer-implemented apparatus embodiment of the present invention and an embodiment incorporating a computer-readable medium.

### DETAILED DESCRIPTION OF THE INVENTION

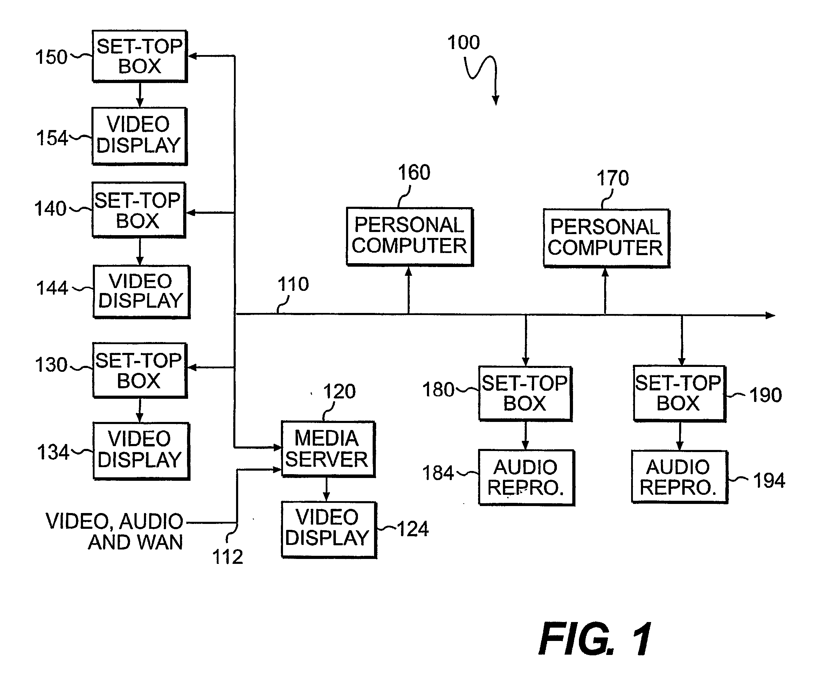

An example of a home area-networked digital video recording and playback system 100, capable of quality of service program playback from multiple receivers, is described below with reference to FIG. 1. In this example, the system 100 combines a media server 120 for receiving and storing multiple electronic audio-visual programs (e.g., digital or analog television broadcasts, video recordings such as those provided by video-on-demand services, digital or analog audio-visual advertisement segments, or audio programs), and one or more reproduction devices such as digital or analog television sets (134, 144 and 154) in a HAN. In the example depicted in FIG. 1, the media server 120 acts as a centralized Digital Video Recorder and Playback device for the reproduction devices and receivers connected to the HAN.

In an embodiment, media server 120 is adapted to receive programming information from at least one wide area network WAN 112, to store programming information, and to communicate programming information to other devices within the home via a home area network 110. By way of example, such audio-visual reproduction devices may include digital or analog television sets (elements 134, 144 and 154), audio-reproduction devices such as stereo receivers (elements 184 and 194) and personal computers (elements 160 and 170.) Network interface devices, such as digital set-top boxes (elements 130, 140, 150, 180 and 190) are adapted to provide network connection, audio or audio-visual decoding, decrypting, and rendering of digital program information for receiver devices, commonly known as "legacy devices," such as analog television sets (in this example, one or more of elements 134, 144 and 154) and stereo receivers (in this example, one or more of elements 184 and 194), where said receiver and reproduction devices do not include network interfaces or are otherwise incompatible, in the absence of such network interface devices, with the home area network.

Those skilled in the art will appreciate in view of this specification that the functionality of the set-top boxes (e.g., elements 130, 140, 150) may be integrated into display or reproduction devices (in this example, any of devices 134, 144 and 154.)

In an embodiment, home area network 110 is compatible with a high-speed wired or wireless networking standard (e.g. Ethernet, HomePNA, IEEE 802.11a, 802.11b, 802.11g, 802.11g over-coax, Wi-Media, IEEE 1394, etc.) In other embodiments, non-standard networking technologies may also be employed, such as is currently available from companies such as Magis, Entropic Communications, and Motorola.

In an embodiment, a plurality of networking technologies may be employed in the HAN using a network bridge, as is known in the art. In this embodiment, a wired networking technology (e.g. Ethernet) may be used to connect fixed location devices of the HAN, while a wireless networking technology (e.g. 802.11g) may be used to connect mobile devices of the HAN.

In yet another embodiment, media server 120 is also capable of being a receiving device for audio-visual information and of interfacing to a legacy device, such as television 124.

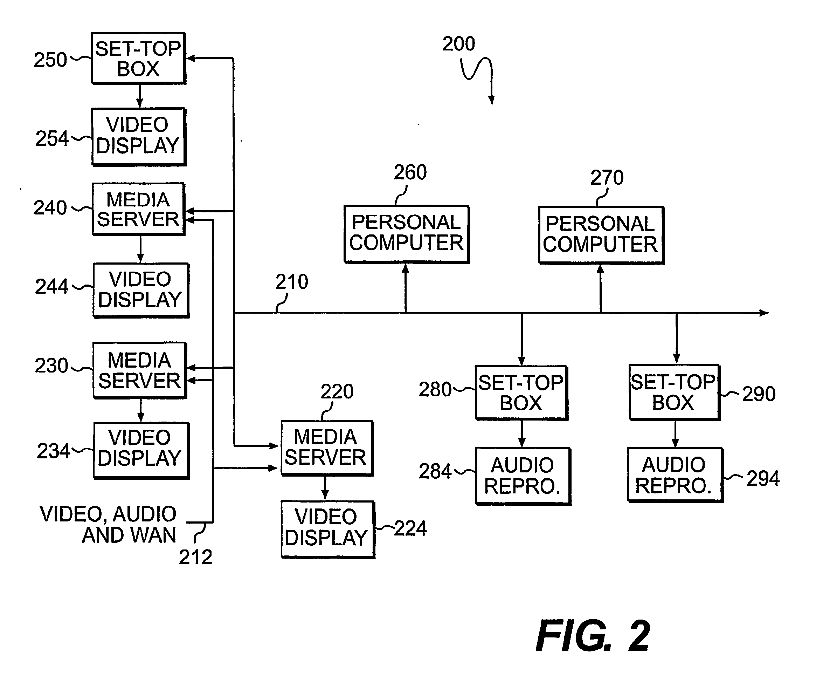

FIG. 2 shows a home area-networked digital video recording and playback system 200 that is a variation of the system 100 described above. Media server capable devices 230 and 240 receive programming information from at least one WAN 212 in parallel with the Media Server 220. In this embodiment, each media server-capable device (e.g., elements 220, 230 and 240) is enabled to communicate programming information to other devices via HAN 210. One advantage to this arrangement is that it allows resources such as tuners and conditional access devices to be added to the network as additional receiving or reproduction devices are added. In this embodiment storage resources may also be added to media server-capable devices (elements 230 and 240.) Alternatively, programming information received by these devices may be directly communicated to storage located in primary media server device 220.

Those skilled in the art should appreciate in view of this specification that the physical layer distributing the WAN 212 and the HAN 210 may be the same, for example, an 802.11g-over-coax HAN sharing the in-home coaxial cable with analog and/or digital cable WAN using frequency division multiplexing ("FDM".) In some embodiments using FDM, a filter (not shown) will be placed at the ingress to the home to prevent the HAN signal from leaking upstream. Similar to HAN 110 of FIG. 1, HAN 210 of FIG. 2 may also include other components, such as, for example, set-top boxes 250, 280 and 290, audio and/or video reproduction devices 254, 244, 234, 284, 294 and 224, and personal computers 260 and 270.

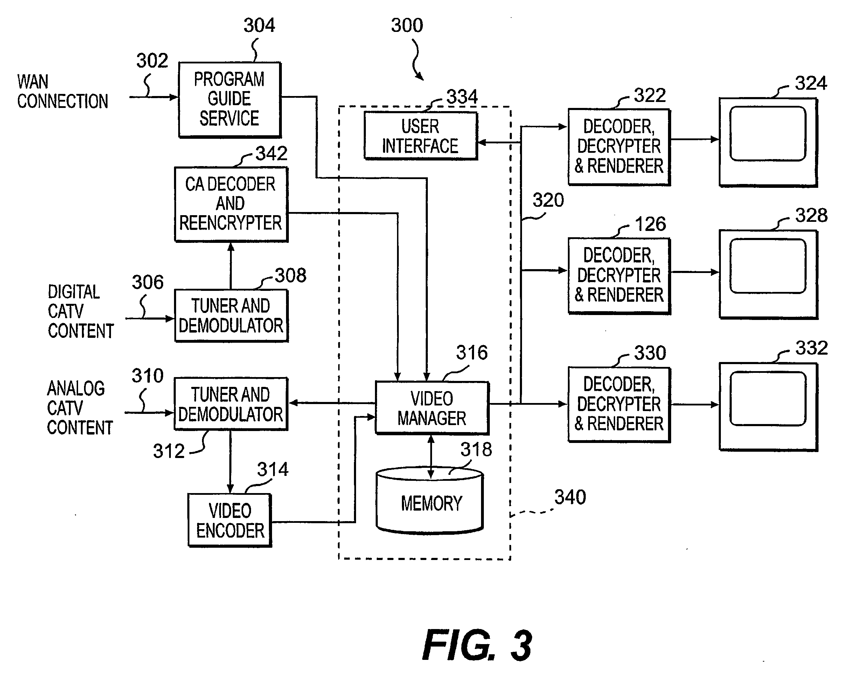

Referring now to FIG. 3, functional components of an embodiment of a home-area networked system 300 will be described. Media information is communicated to the system 300 through, for example, a connection to a hybrid fiber-coax cable network via analog channels 310, digital channels 306 and/or a DOCSIS broadband connection 302. Other examples of WAN network connections include, but are not limited to xDSL, satellite, fiber-to-the-home, fixed wireless, and over-the-air broadcast network connections. Analog and digital cable media content is received by a tuner and demodulator circuitry (for example, elements 308 and 312.) In an embodiment, digital content is received in encrypted format through WAN connection 302 and decrypted using the native conditional access mechanism of the cable provider (i.e., hardware and/or software provided by the cable provider for decrypting content encrypted by the cable provider) and then re-encrypted for persistent storage using conditional access decoder and re-encrypter module 342. Program guide service 304 may extract programguide information from data received by the HAN from WAN connection 302. Analog content is converted to digital format compatible with digital storage and optionally encrypted using the video encoder module 314. Media information can also be received through DOCSIS modem (not shown) via, for example, a TCP/IP connection. Media content received from any source may be indexed and written to Memory 318 in media server 340. In the preferred embodiment, the memory is a Hard Disk Drive, but other methods are known in the art, including solid-state memory, Random Access Memory, optical disk and magnetic tape. Applications 334 in media server 340 provide interactive services, including, for example, a user interface allowing the user to access media through various means including a video library, video on demand, electronic program guide and/or live-pause functionality. Media server 340 may additionally include a video manager 316 or other centralized resource manager. Media server 340 may direct content to display or reproduction devices (for example reproduction devices 324, 328 and 332) through HAN connection medium 320 and through decoder, decrypted and renderer devices (for example, devices 322, 126 and 330.) As discussed earlier, HAN connection medium 320 may include any HAN connection mechanism known to those of skill in the art, including wired networking technologies such as Ethernet and/or wireless networking technologies such as 802.11g.

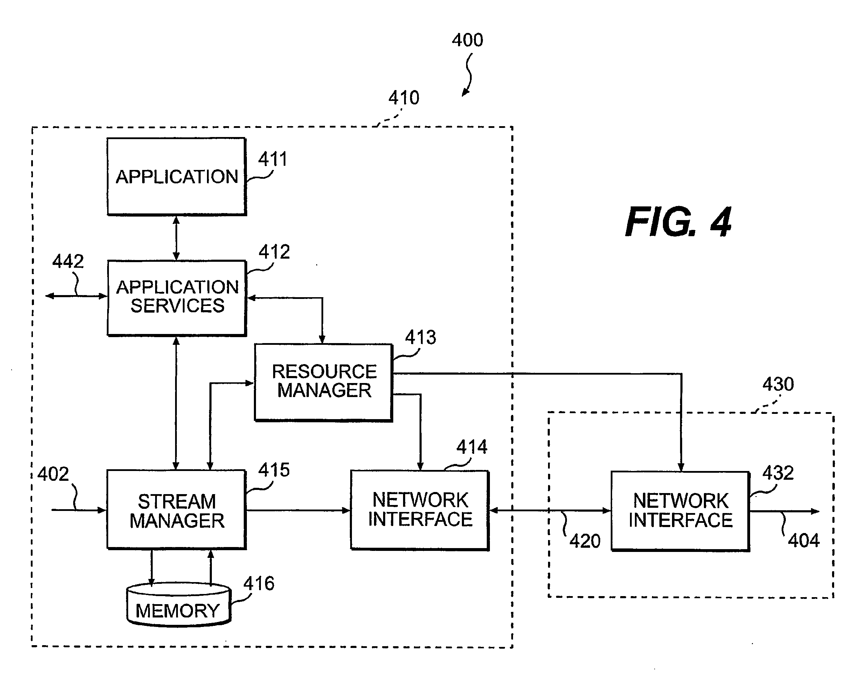

FIG. 4 provides a schematic block diagram illustrating an example media server and an example destination or reproduction device that may be used in embodiments of the invention. As depicted in FIG. 4, applications services module 412 in media server 410 provides an applications programming interface to the stream manager 415 and the resource manager 413. A video playback application 411 creates a video playback session by requesting the stream manager 415 to create a network video stream to a destination device 430. Application 411 requests the necessary resources, such as network bandwidth, from the resource manager 413. If the necessary resources are not available, resource manager 413 rejects the application's request. If the resources are available, the resource manager 413 assigns these resources (for example, transmission bandwidth) to application 411. In an embodiment, application 411 is implemented to self-limit the bandwidth of the generated stream to the allocated bandwidth.

Media server 410 may additionally include memory 416, a link 442 to application services 412, an interface 402 to stream manager 415 and a HAN network interface 414. Media server 410 of FIG. 4 maybe connected to one or more HAN devices through HAN connection 420.

In another embodiment, resource manager 413 is also capable of communicating bandwidth allocation information to QoS mechanisms operating in conjunction with the network interface 414 of media server 410 and network interface 432 of destination device 430. Destination device 430 may be connected to other HAN devices through, for example, HAN connection 404. Exemplary methods of communicating QoS and bandwidth control are described in commonly owned U. S. Patent Application Serial No.10/345,870 filed January 16,2003, entitled"Local Area Networked System Having Intelligent Traffic Control And Efficient Bandwidth Management. Other implementations may be employed without limiting the scope of the present invention. For example, in a further embodiment, either or each of network interfaces 414 and 432 may rate-limit the streams based on a queue ordering the streams according their priorities for purposes of imposing a bandwidth constraint. For example, a high-priority stream may be assigned a bandwidth corresponding to most of the bandwidth available on the HAN, whereas a lower-priority stream may be assigned any remaining bandwidth in the HAN on a best efforts basis. Other means of assigning bandwidth are known in the art, including Time Division Multiple Access.

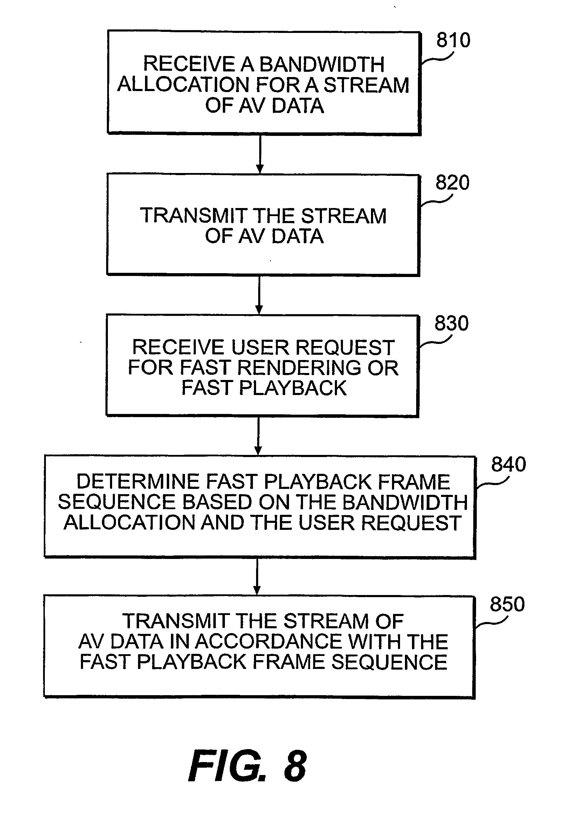

FIG. 8 shows an embodiment of a method of the present invention. The steps of this method embodiment may be carried out, for example, by a media server in a HAN, such as any of the media servers shown in FIGS. 1-4. In step810, as depicted in FIG. 8, a bandwidth allocation for a stream of data is received. For example, a media server may receive a bandwidth allocation from a central resource manager in response to a request from the media server. The media server's request, for example, may be for the central resource manager to assign resources needed to allow the media server to satisfy a user request, such as a user request for streaming audiovisual data to a display device in the HAN

In step 820, the stream of data is transmitted. For example, the media server may transmit audiovisual data to a display device in the HAN to satisfy a user request. In embodiments, such a transmission will be consistent with the resources assigned by the central resource manager of the HAN to the media server for purposes of satisfying the user request. For example, the media server may stream data to the display device in the HAN using a bandwidth that is less than or equal to a bandwidth that is assigned by the central resource manager to the media server for the purpose of satisfying the user request.

In step 830, a user request for a fast rendering is received. A typical fast rendering request may involve either a request to fast forward or a request to fast rewind a stream of data being rendered on a display device of the HAN. The user request may include a speed factor which specifies how fast the fast rendering should be in relation to the normal rendering speed of the stream of data on the display device. It should be noted that in an embodiment, the user may click on a fast-forward (or fast-rewind) button on the user's remote control once to indicate a request for a fast-forward (or fast-rewind) speed factor of 3x. A second click of that button within a predetermined period of time, e.g., two seconds, of the first click may indicate a request for a fast-forward (or fast-rewind) speed factor of 10x. In other words, in embodiments, the user may specify a speed factor for fast playback implicitly by way of using a particular key sequence on the remote control to issue the fast playback command.

In a typical scheme of designating speed factors, a speed factor of "N" may indicate that the fast rendering should be N times faster than the normal rendering speed for the system or the device. For example, if a program being streamed is T minutes long at the normal rendering speed, then a speed factor of N indicates that it may be viewed in its entirety at the fast rendering speed in approximately T/N minutes. Similarly, if the normal rendering speed for the system or device is Y frames per second, then a speed factor of N may indicate that the fast rendering speed should be N-Y frames per second.

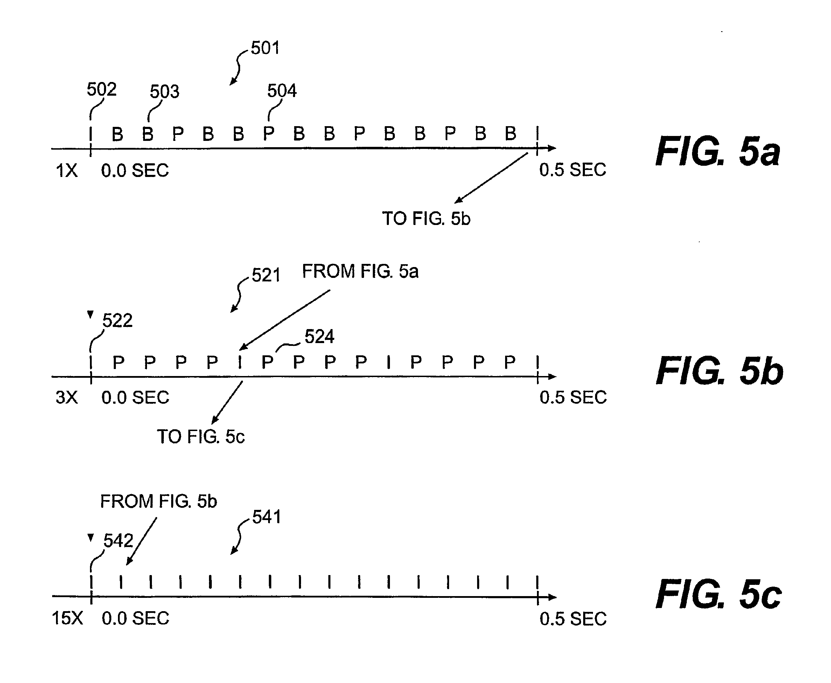

In step 840, a fast playback frame sequence is determined based on the bandwidth allocation and the user request. For example, the media server may drop certain classes of frames that are part of the normal playback frame sequence (e.g., the original frame sequence of the stream of data) so that the modified frame sequence, when rendered at a speed given by the speed factor and streamed to the display device, does not exceed the bandwidth allocation that was received in step 810. Further details of this determination process, as well as typical examples of the various classes of frames that may be deleted or replaced in determining the fast playback frame sequence, are discussed below in connection with FIGS. 5, 6 and 9.

In step 850, the stream of data is transmitted in accordance with the fast playback frame sequence that was determined in step 840. For example, the media server may transmit the user data in accordance with the fast playback frame sequence to the relevant display device.

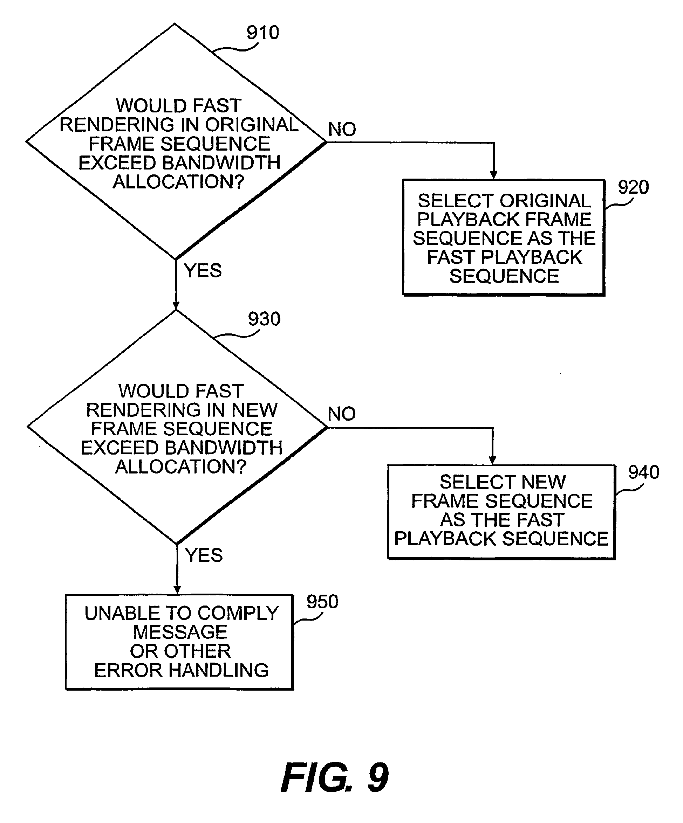

FIG. 9 shows more details of the determining step 840 of the embodiment depicted in FIG. 8. In step 910, a determination is made of whether fast rendering the original frame sequence of the data stream in accordance with the speed factor would exceed the bandwidth allocation that had been received. ("Rendering" as used in this specification includes any processing or formatting of the audio-visual data stream for display on the relevant display device of the HAN, as well as transmission of the formatted data stream from, for example, the media server to that display device, and may also include in embodiments the process of decoding the audio-visual stream at the display device.) If such fast rendering and transmission of the original frame sequence does not exceed the bandwidth allocation, then, in step 920, the original frame sequence of the data stream is selected for transmission at the applicable speed factor.

If, in step 910, a determination is made that fast rendering and transmission of the original frame sequence would exceed the bandwidth allocation that had been received, then, in step 930, a determination is made of whether fast rendering of a new frame sequence of the data stream in accordance with the speed factor and subsequent transmission would exceed the bandwidth allocation that had been received. The new frame sequence may be derived from the original frame sequence by deleting or replacing various classes of frames that are present in the data stream, as discussed further below.

If, in step 930, it is determined that fast rendering of the new frame sequence of the data stream in accordance with the speed factor would not exceed the bandwidth allocation that had been received, then, in step 940, the new frame sequence is selected as the fast playback frame sequence in step 940.

If, in step 930, it is determined that fast rendering of the new frame sequence of the data stream in accordance with the speed factor would exceed the bandwidth allocation that had been received, then, in step 950, an error-handling process may be executed. For example, the media server may direct the display device to which the data stream is being streamed to display a message to the user indicating inability to satisfy the user's request for fast rendering due to insufficient bandwidth in the HAN. Alternatively, execution may loop back to step 930 for consideration of another new frame sequence that is different from the frame sequence considered in the earlier execution of step 930. The new frame sequence may, for example, involve the deletion of more classes of frames from the data stream compared to the frame sequence considered in the earlier execution of step 930.

As discussed above, a media server may determine to drop or replace classes of frames from an AV stream in responding to a user request for fast playback of the AV stream. Examples of this determination process are discussed next. Referring now to FIG. 5a, a frame sequence of typical real-time 30-frames/second playback of MPEG-2 video content is depicted. An MPEG-2 stream is comprised of "I-Frames" 502, "B-Frames" 503 and "P-Frames" 504. Thus, in the example of MPEG-2 video content, each of these may be considered to be a class of frames. More generally, in any coding scheme for audio-visual data that provides for sets of differently encoded frames, each set of frames encoded according to a specific protocol may be considered to be a "class" of frames.

Intra-frames or I-Frames in an MPEG-2 stream are single compressed frames that contain all the spatial information of a video frame. Predictive Frames or P-Frames are computed based on neighboring I and P Frames, resulting in a higher rate of compression than I-Frames. Bi-directional or B-Frames use both a past and subsequent frame as a reference and result in the highest compression of the three frame types. Advanced video codecs such as MPEG-4 and H.264 operate in a similar fashion. An example of the frame content of a typical MPEG-2 encoded video stream based on a study of MPEG-2 encoded videos is 56% I-Frame data, 27% P-frame data and 17% B-frame data. See "The Emerging H.264/AVC Standard", Schafer, R. et al., EBU Technical Review, January 2003. While this is typical, in specific variable bit-rate MPEG-2 sequences P-frames and B-frames can be larger than nearby I-frames. In the following examples, a 4 Mbps MPEG-2 stream is assumed, although those skilled in the art will appreciate that the bandwidth requirements of MPEG-2 streams are controlled by the parameters used during encoding and can exceed 40 Mbps, or result in streams less than 1 Mbps. A person of ordinary skill in the art would understand from this specification how to apply the invention to other bandwidths.

Referring now to FIG. 5b, the frame sequence for fast playback of MPEG-2 video at a speed factor of 3x fast-forward is depicted. The fast-forward operation is performed by dropping the B-frames and playing back the remaining frames at 30-frames/second. Using the assumptions of a 4 Mbps MPEG-2 video stream where each I-frame 522 averages 1.1 Mbits, each P-frame (see for example element 524) averages 0.14 Mbits, and each B-frame averages 0.034 Mbits, playing this stream at 3x fast-forward would result in a stream of 9.96 Mbps using the sequence in FIG. 5b. Without dropping the B-frames, the stream would have used 12 Mbps at a speed factor of 3x.

Referring now to FIG. 5c, playback of MPEG-2 video at a speed factor of 10x fast-forward is represented by element 541. The fast-forward operation is performed by dropping the B-frames and P-frames and playing back the remaining I-frames at 30-frames/second (see for example element 542.) Using the assumptions for a 4Mbps MPEG-2 video stream where each I-frame averages 1.1 Mbits, each P-frame averages 0.14 Mbits and each B-frame averages 0.034 Mbits, playing this stream at a speed factor of 10x fast-forward would result in a stream of 33.6 Mbps using the frame sequence in FIG. 5b. It should be appreciated by those skilled in the art that playback rates at speed factors greater than 10x can be achieved by dropping some I-frames in addition to B-frames and P-frames.

Referring now to FIG. 4 and to FIG. 5b, in an embodiment where the application 411 switches to a different playback rate (i.e., speed factor), for example when a user selects a speed factor of 3x fast-forward with a remote control, the application will request additional bandwidth from the resource manager 413. If the requested bandwidth is available on the HAN, the application 411 and the resource manager 413 may negotiate an increased bandwidth allocation to the application. If no more bandwidth is available, the resource manager 413 will reject the request for more bandwidth. In an alternative embodiment, in response to the initial request by a media server for bandwidth for rendering of a stream at a normal playback speed factor, the resource manager may also send the media server the maximum amount of bandwidth that may be provided for fast playback of that stream. Once the bandwidth available to the application has been determined, the applicable can establish the fast-forward playback frame sequence to be used, and communicate this operation to the stream manager as described below.

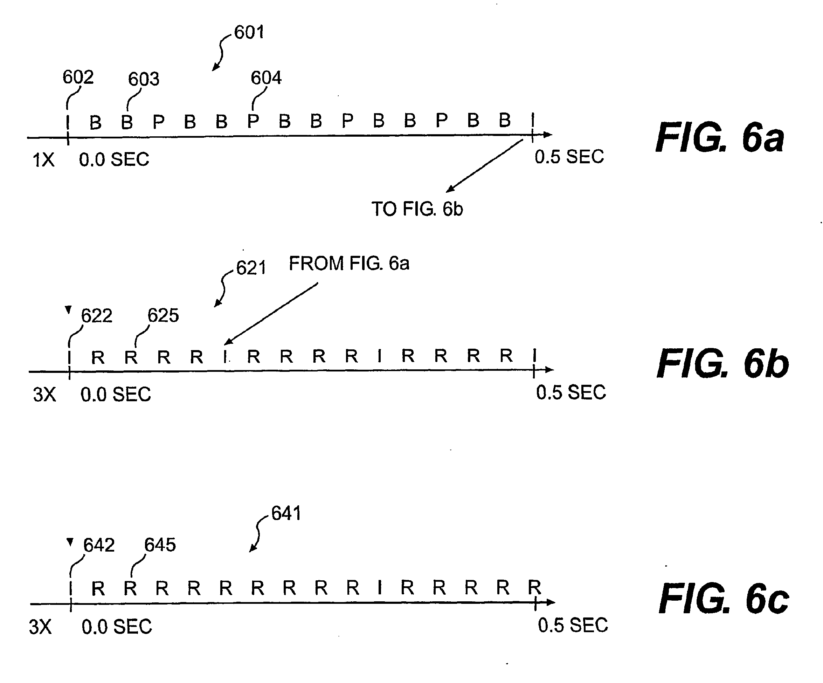

Referring now to FIG. 5b and to FIG. 6b, an alternative fast playback frame sequence at a speed factor of 3x is presented that results in bandwidth savings over three times that of fast playback frame sequence 521 depicted in FIG. 5b. In the sequence depicted in FIG. 5b, the P-frames (for example, element 524) have been removed, and replaced with frames labeled "R-Frames" 625 for repeat-frames. In this fast playback frame sequence, the previous I-frame is repeated, for example frame 622, or held in the video frame buffer (instead of decoding and rendering a new P-frame, as may be otherwise required.) This results in a fast forward playback frame sequence at a speed factor of 3x without requiring the use of additional bandwidth required to render P-frames. Sending only the I-frames in this example results in a fast-forward playback frame sequence that requires only 6.72 Mbps, a significant savings over the 9.96Mbps required to play back the frame sequence of FIG. 5b. It should be appreciated by those skilled in the art based on the present specification that the number of frames repeated can be adjusted to trade off bandwidth at the expense of "smoothness" of the playback sequence.

Referring now to FIGS. 5b, 6b and 6c, another alternative fast playback frame sequence 641 at a speed factor of 3x is described. This frame sequence drops not only the B and P-frames, but also every other I-frame. Sending only the I-frames in this example results in a fast-forward sequence that requires only 3.36Mbps, a bandwidth requirement that is now below the required bandwidth for a normal playback frame sequence (i.e., a speed factor of 1x.) It should be appreciated by those skilled in the art that the same bandwidth saving methods can be applied to other fast playback frame sequence speed factors, both fast-forward and fast-reverse. It should also be appreciated to those skilled in the art that the number of frames dropped may be varied to accommodate Variable Bit-Rate streams.

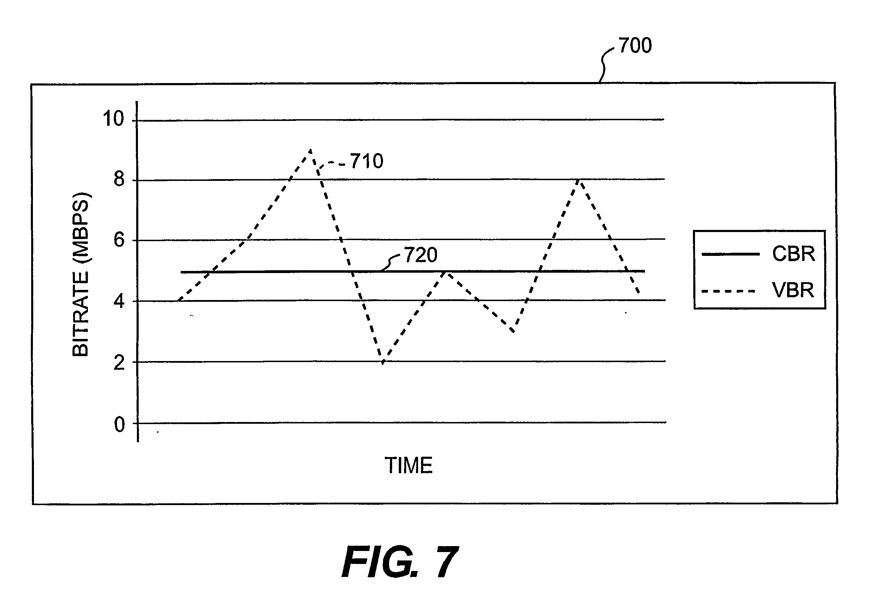

Referring now to FIGS. 4 and 7, another aspect of the invention is introduced. FIG. 7 depicts required bandwidth of video streams over time for both Variable Bit-Rate (VBR) streams 710 and Constant Bit-Rate (CBR) streams 720. CBR streams have the advantage of predictable storage and communication bandwidth requirements. A CBR stream is generated at target bit-rate, e.g., 5 Mbps. A CBR stream is typically padded if the amount of data required to represent the stream drops below the target bit-rate, and artifacts are introduced when the bandwidth required to adequately encode the stream would exceed the target bit-rate.

A VBR stream is also generated at a target bit-rate, although with VBR the target is typically an average over either the entire stream or a predefined time window. The advantages of VBR encoding are that additional bits can be assigned to scenes of high audio/visual content while bits can be saved during scenes of reduced audio/visual content. Additionally, the required channel capacity of a multiplex of many VBR streams is significantly less than the sum of the maximum VBR bit-rate of the streams, as not all streams will be consuming maximum bit-rate at any given time. Statistical methods for determining required channel capacity for given VBR parameters are known to those skilled in the art.

An embodiment of a digital video recording and playback system as depicted in FIG. 9 is capable of receiving streams over interface 402 encoded at either CBR or VBR. The applications services 412 query for bandwidth constraints of incoming streams 402 to determine the required disk and network bandwidth resources to be requested from the resource manager 413. In an embodiment, the stream encoding parameters are embedded in the media stream 402, such as a data field in an MPEG2 stream (typically contained in the system header of the Program Streams or audio/video rates in elementary streams.) In another embodiment, the application services communicate with a database (e.g. Electronic Program Guide Service) through either an IP or Out-Of-Band link 442 to determine the encoding parameters. In a further embodiment, the stream manager 415 reports the incoming bandwidth to the application services module 412, which negotiates higher or lower bandwidth from resource manager 413 based on bandwidth trends of the incoming stream. Resource manager 413 can accept or reject the request based on the statistical nature of other traffic on the network 420. In an embodiment, traffic exceeding the bandwidth assignment is treated on a best-efforts basis, with no guaranteed quality of service (i.e., such excess bandwidth is provided only when otherwise available in the HAN.) In another embodiment, a complete media program is streamed to memory 416 in its entirety before the media program is played back over the network 420. In this embodiment, the application services module 412 may store the observed VBR parameters of the media program as it was being streamed to memory 416 in memory associated with the stored media program. On playback, the application services module 412 may read the stored VBR parameters and use these parameters to determine the amount of network resources to request from the resource manager 413.

The invention can also be configured to provide support for VBR streams and indexing service for trick mode functionality. With VBR streams, the size of each I, B and P frame can vary widely. In the preferred embodiment, the indexing information is stored such that not only the location of the frames can be determined, but also the distance between them, and therefore the size of the frames can be determined. In the preferred embodiment, when frames are dropped for trick-play over a network of limited bandwidth, the number of frames dropped will depend on the size of the frames and the allocated bandwidth to transmit them.

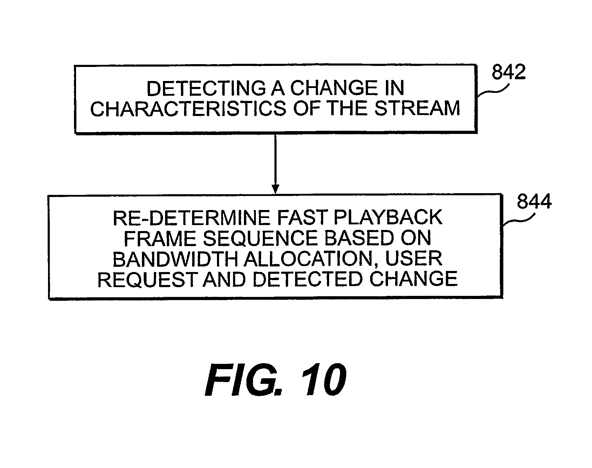

A variation on the embodiments discussed with respect to FIGS. 8 and 9 is illustrated in FIG. 10. In this embodiment, a change in the characteristics of the data stream is detected after an initial fast playback frame sequence has been determined. In response, a new fast playback frame sequence is determined based on the bandwidth allocation, the user request and the detected change.

Accordingly, in step 842 (which, in this example, follows step 840 of FIG. 8), a change in the characteristics of the data stream is detected. For example, for a Variable Bit-Rate stream, the media server may detect a material increase or decrease in the average bandwidth consumed by the stream over a period of time. Media server 340 may detect this material increase or decrease by, for example, one of the methods discussed above -- e.g., the media server may extract information indicating the change from stream encoding parameters embedded in the media stream, or from a database (such as an electronic program guide service) that is privy to such information characterizing the stream.

The media server (e.g., a stream manager in the media server) may negotiate a higher or lower bandwidth allocation from the centralized resource manager in response to the detection event. For example, if media server 340 detects a material increase (decrease) in the bandwidth required to transmit the data stream to the relevant reproduction device within the HAN, the media server may request a new bandwidth allocation for the data stream that is sufficient for transmission to the reproduction device. If the centralized resource manager provides a new bandwidth allocation that is sufficient for transmission to the reproduction device, the media server may utilize the new bandwidth allocation in transmission of the data stream to the relevant reproduction device.

In step 844, the fast playback frame sequence is re-determined, based on the bandwidth allocation, the user request for fast rendering and the detected change in the stream characteristics. For example, the media server, in response to the detected change in the stream characteristics and a new bandwidth allocation from the centralized resource manager responding to such change, may re-determine the fast playback frame sequence. Such re-determination may be carried out in the same way that the determination step 840 in FIG. 8 is carried out, except with the use of the new bandwidth allocation for the data stream in the calculation. Step 850 may then be carried out with the re-determined fast playback frame sequence for transmission of the data stream.

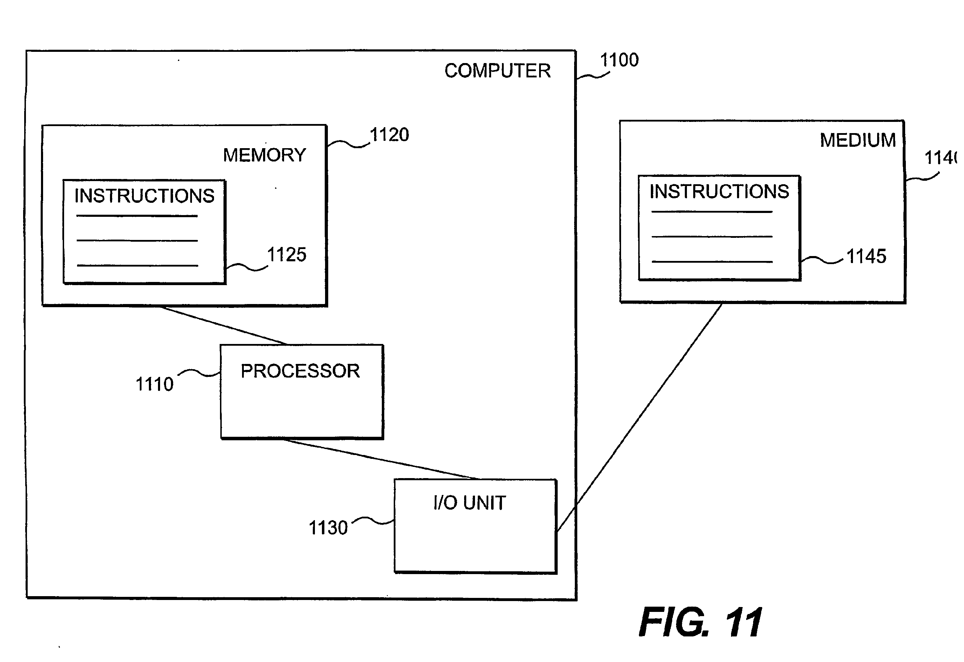

FIG. 11 shows an example of an apparatus used in some embodiments of the present invention. In FIG. 11, a medium 1140 containing instructions 1145 may be operatively coupled to a computer 1100. For example, instructions 1145 may contain the steps in an embodiment of a method of the present invention. For example, instructions 1145 in a specific implementation may comprise the instructions corresponding to the steps carried out by a media server in any of FIGS. 8-10. In the example depicted in FIG. 11, computer 1100 contains a processor 1110 which is coupled to an input/output unit 1130 and a memory 1120. Memory 1120 may also have instructions 1125, which correspond to the steps in an embodiment of a method of the present invention. In a specific implementation, instructions 1145 of medium 1140 may be copied into memory 1120.

The structures shown and discussed in apparatus embodiments of the invention are exemplary only and the functions performed by these structures may be performed by any number of structures, as is known to those of skill in the art in view of this specification. All of such possible variations are within the scope and spirit of embodiments of the invention and the appended claims.

Propagating signals embodied in a medium, such as a carrier wave or other carrier medium, that are products of embodiments of methods of the invention, or products of the use of embodiments of systems or devices of the present invention, are within the scope and spirit of the present invention and the appended claims. Similarly, any medium containing instructions that are readable by a processor and that, when executed by the processor, perform the steps of method embodiments of the present invention, are also within the scope and spirit of the present invention and the appended claims.

Other variations and modifications of the present invention are possible, given the above written description and the appended drawings. Persons skilled in the art will recognize from these that the invention is not limited to the embodiments described, and may be practiced with modifications and alterations limited only by the scope of the appended claims which are intended to cover such modifications and alterations, so as to afford broad protection to the invention and its equivalents.

## Claims

1. A method for providing fast rendering of streamed digital content in a home area network, the method comprising:
receiving (810) at a media server a bandwidth allocation from a resource manager for a stream of AV data;
receiving (830) a user request for a fast rendering of the stream of AV data, wherein the user request includes a speed factor; **characterised by**
determining (840) a fast playback frame sequence
associated with the stream of AV data based on the bandwidth allocation and the user request.

2. The method of claim 1 additionally comprising transmitting (850) the stream of AV data in accordance with the fast playback frame sequence of the determining step.

3. The method of claim 2 wherein the determining comprises:
determining (910) whether the fast rendering of the stream of AV data in an original playback frame sequence in accordance with the speed factor would exceed the bandwidth allocation; and
responsive to the step of determining (910) whether the fast rendering of the stream of AV data in the original playback frame sequence in accordance with the speed factor would exceed the bandwidth allocation, selecting (920) the original playback frame sequence as the fast playback frame sequence.

4. The method of claim 2 wherein the determining comprises:
determining (910) whether the fast rendering of the stream of AV data in an original playback frame sequence in accordance with the speed factor would exceed the bandwidth allocation; and
responsive to the step of determining (910) whether the fast rendering of the stream of AV data in the original playback frame sequence in accordance with the speed factor would exceed the bandwidth allocation, selecting (940) the fast playback frame sequence based on at least one of: (i) dropping (621) at least a first class of frames from the original playback frame sequence, and (ii) repeating (641) a plurality of frames of a second class of frames from the original playback frame sequence.

5. The method of claim 4 wherein each of the first class of frames and the second class of frames is selected (601) from the group consisting of MPEG intra-coded frames, MPEG predictive frames and MPEG bidirectional-predictive frames.

6. The method of claim 2 wherein the fast playback frame sequence is based on deletion (621) of a plurality of MPEG bidirectional-predictive frames from an original playback frame sequence.

7. The method of claim 6 wherein the fast playback frame sequence is additionally based on deletion (621) of a plurality of MPEG predictive frames from the original playback frame sequence.

8. The method of claim 7 wherein the fast playback frame sequence is additionally based on repeating (621) at least one MPEG intra-coded frame of the original playback frame sequence in place of the plurality of MPEG predictive frames.

9. The method of claim 7 wherein the fast playback frame sequence is additionally based on deletion (621) of at least one MPEG intra-coded frame from the original playback frame sequence and repetition of a preceding MPEG intra-coded frame in place of the at least one intra-coded frame.

10. The method of claim 2 further comprising, after the determining step:
detecting (842) a change in the characteristics of the stream of AV data; and
re-determining (844) the fast playback frame sequence associated with the stream of AV data based on the bandwidth allocation, the user request and the detected change in characteristics of the stream of AV data.

11. The method of claim 10 wherein the detecting step is carried out based on extraction of stream-encoding parameters of the stream of AV data.

12. The method of claim 10 wherein the detecting step is carried out based on information regarding the stream of AV data obtained from a database.

13. A computer-readable storage medium incorporating software code arranged to perform all the steps of any one of the preceding claims.

14. An apparatus for providing fast rendering of streamed digital content in a home area network, the apparatus comprising:
means (120) for receiving from a resource manager a bandwidth allocation for a stream of AV data;
means (120) for receiving a user request for a fast rendering of the stream of AV data,
wherein the user request includes a speed factor; and **characterised by** means (120) for determining a fast playback frame sequence associated with the stream of AV data based on the bandwidth allocation and the user request.

15. The apparatus of claim 14 additionally comprising means (120) for transmitting the stream of AV data in accordance with the fast playback frame sequence of the determining step.

16. The apparatus of claim 15 further comprising:
means (120) for determining whether the fast rendering of the stream of AV data in an original playback frame sequence in accordance with the speed factor would exceed the bandwidth allocation; and
means (120) responsive to the means for determining whether the fast rendering of the stream of AV data in an original playback frame sequence in accordance with the speed factor would exceed the bandwidth allocation, for selecting the original playback frame sequence as the fast playback frame sequence.

17. The apparatus of claim 15 further comprising:
means (120) for determining whether the fast rendering of the stream of AV data in an original playback frame sequence in accordance with the speed factor would exceed the bandwidth allocation; and
means (120) responsive to the means for determining whether the fast rendering of the stream of AV data in an original playback frame sequence in accordance with the speed factor would exceed the bandwidth allocation, for selecting the fast playback frame sequence based on at least one of : (i) dropping at least a first class of frames from the original playback frame sequence, and (ii) repeating a plurality of frames of a second class of frames from the original playback frame sequence.

18. The apparatus of claim 17 wherein each of the first class of frames and the second class of frames is selected (601) from the group consisting of MPEG intra-coded frames, MPEG predictive frames and MPEG bidirectional-predictive frames.

19. The apparatus of claim 15 wherein the fast playback frame sequence is based on deletion (621) of a plurality of MPEG bidirectional-predictive frames from an original playback frame sequence.

20. The apparatus of claim 19 wherein the fast playback frame sequence is additionally based on repeating (621) at least one MPEG intra-coded frame of the original playback frame sequence in place of the plurality of MPEG predictive frames.

21. The apparatus of claim 19 wherein the fast playback frame sequence is additionally based on deletion (641) of at least one MPEG intra-coded frame from the original playback frame sequence and repetition of a preceding MPEG intra-coded frame in place of the at least one intra-coded frame.

22. The apparatus of claim 15 further comprising:
means (120) for detecting a change in the characteristics of the stream of AV data; and
means (120) for re-determining the fast playback frame sequence associated with the stream of AV data based on the bandwidth allocation, the user request and the detected change in characteristics of the stream of AV data,

23. The apparatus of claim 22 wherein the means (120) for detecting a change carries out its operation based on extraction of stream-encoding parameters of the stream of AV data.

24. The apparatus of claim 22 wherein the means (120) for detecting a change carries out its operation based on information regarding the stream of AV data obtained from a database.

## Patentansprüche

1. Verfahren zur Bereitstellung einer schnellen Bildaufbereitung gestreamter digitaler Inhalte in einem Heimnetzwerk, wobei das Verfahren die folgenden Schritte aufweist:
Empfang (810) an einem Medienserver einer Bandbreitenzuweisung für einen audiovisuellen oder AV-Datenstrom von einem Ressourcen-Manager;
Empfang (830) einer Benutzeranfrage für eine schnelle Bildaufbereitung des AV-Datenstroms, wobei die Benutzeranfrage einen Speedfaktor einschließt, **gekennzeichnet durch**
Bestimmung (840) einer Schnellwiedergabe-Vollbildsequenz, welche dem AV-Datenstrom zugehörig ist, basierend auf der Bandbreitenzuweisung und der Benutzeranfrage.

2. Verfahren nach Anspruch 1, welches zusätzlich den Schritt der Übertragung (850) des AV-Datenstroms gemäß der Schnellwiedergabe-Vollbildsequenz des Bestimmungsschritts aufweist.

3. Verfahren nach Anspruch 2, **dadurch gekennzeichnet, dass** die Bestimmung Folgendes aufweist:
Bestimmung (910), ob die schnelle Bildaufbereitung des AV-Datenstroms in einer ursprünglichen Wiedergabe-Vollbildsequenz gemäß dem Speedfaktor die Bandbreitenzuweisung überschreiten würde; und
ansprechend auf den Schritt der Bestimmung (910), ob die schnelle Bildaufbereitung des AV-Datenstroms in der ursprünglichen Wiedergabe-Vollbildsequenz gemäß dem Speedfaktor die Bandbreitenzuweisung überschreiten würde, Auswahl (920) der ursprünglichen Wiedergabe-Vollbildsequenz als die Schnellwiedergabe-Vollbildsequenz.

4. Verfahren nach Anspruch 2, **dadurch gekennzeichnet, dass** die Bestimmung Folgendes aufweist:
Bestimmung (910), ob die schnelle Bildaufbereitung des AV-Datenstroms in einer ursprünglichen Wiedergabe-Vollbildsequenz gemäß dem Speedfaktor die Bandbreitenzuweisung überschreiten würde; und
ansprechend auf den Schritt der Bestimmung (910), ob die schnelle Bildaufbereitung des AV-Datenstroms in der ursprünglichen Wiedergabe-Vollbildsequenz gemäß dem Speedfaktor die Bandbreitenzuweisung überschreiten würde, Auswahl (940) der Schnellwiedergabe-Vollbildsequenz basierend auf zumindest einem der folgenden Ereignisse: (i) Fallenlassen (621) mindestens einer ersten Kategorie bzw. Gruppe von Vollbildern aus der ursprünglichen Wiedergabe-Vollbildsequenz, und (ii) Wiederholen (641) einer Vielzahl von Vollbildern einer zweiten Kategorie bzw. Gruppe von Vollbildern aus der ursprünglichen Wiedergabe-Vollbildsequenz.

5. Verfahren nach Anspruch 4, **dadurch gekennzeichnet, dass** alle Vollbilder erster Kategorie und alle Vollbilder zweiter Kategorie aus der Gruppe bestehend aus intracodierten MPEG-Volllbildern, prädiktiven MPEG-Vollbildern und bidirektional-prädiktiven Vollbildern ausgewählt werden (601).

6. Verfahren nach Anspruch 2, **dadurch gekennzeichnet, dass** die Schnellwiedergabe-Vollbildsequenz auf der Löschung (621) einer Vielzahl bidirektional-prädiktiver MPEG-Vollbilder aus einer ursprünglichen Wiedergabe-Vollbildsequenz basiert.

7. Verfahren nach Anspruch 6, **dadurch gekennzeichnet, dass** die Schnellwiedergabe-Vollbildsequenz zusätzlich auf der Löschung (621) einer Vielzahl von prädiktiven Vollbildern aus der ursprünglichen Wiedergabe-Vollbildsequenz basiert.

8. Verfahren nach Anspruch 7, **dadurch gekennzeichnet, dass** die Schnellwiedergabe-Vollbildsequenz zusätzlich auf der Wiederholung (621) mindestens eines intracodierten MPEG-Vollbildes der ursprünglichen Wiedergabe-Vollbildsequenz anstelle der Vielzahl prädiktiver MPEG-Vollbilder basiert.

9. Verfahren nach Anspruch 7, **dadurch gekennzeichnet, dass** die Schnellwiedergabe-Vollbildsequenz zusätzlich auf der Löschung (621) mindestens eines intracodierten MPEG-Vollbildes aus der ursprünglichen Wiedergabe-Vollbildsequenz und der Wiederholung eines vorhergehenden intracodierten MPEG-Vollbildes anstelle des mindestens einen intracodierten Vollbildes basiert.

10. Verfahren nach Anspruch 2, welches nach dem Bestimmungsschritt des Weiteren die folgenden Schritte aufweist:
Erfassung (842) einer Veränderung der Eigenschaften des AV-Datenstroms; und
Neubestimmung (844) der Schnellwiedergabe-Vollbildsequenz, welche dem AV-Datenstrom zugehörig ist, basierend auf der Bandbreitenzuweisung, der Benutzeranfrage und der erfassten Veränderung der Eigenschaften des AV-Datenstroms.

11. Verfahren nach Anspruch 10, **dadurch gekennzeichnet, dass** der Erfassungsschritt basierend auf einer Extraktion von Codierparametern des AV-Datenstroms durchgeführt wird.

12. Verfahren nach Anspruch 10, **dadurch gekennzeichnet, dass** der Erfassungsschritt basierend auf Informationen bezüglich des AV-Datenstroms, welcher von einer Datenbank erhalten wird, durchgeführt wird.

13. Computerlesbares Speichermedium, welches einen Software-Code umfasst, der zur Durchführung aller Schritte der vorhergehenden Ansprüche ausgelegt ist.

14. Gerät zur Bereitstellung einer schnellen Bildaufbereitung gestreamter digitaler Inhalte in einem Heimnetzwerk, wobei das Gerät Folgendes aufweist:
eine Vorrichtung (120) für den Empfang einer Bandbreitenzuweisung für einen AV-Datenstrom von einem Ressourcen-Manager;
eine Vorrichtung (120) für den Empfang einer Benutzeranfrage für eine schnelle Bildaufbereitung des AV-Datenstroms, wobei die Benutzeranfrage einen Speedfaktor einschließt; und **gekennzeichnet durch**
eine Vorrichtung (120) für die Bestimmung einer Schnellwiedergabe-Vollbildsequenz, welche dem AV-Datenstrom zugehörig ist, basierend auf der Bandbreitenzuweisung und der Benutzeranfrage.

15. Gerät nach Anspruch 14, welches zusätzlich eine Vorrichtung (120) zur Übertragung des AV-Datenstroms gemäß mit der Schnellwiedergabe-Vollbildsequenz des Bestimmungsschritts aufweist.

16. Gerät nach Anspruch 15, welches des Weiteren Folgendes aufweist:
eine Vorrichtung (120) zur Bestimmung, ob die schnelle Bildaufbereitung des AV-Datenstroms in einer ursprünglichen Wiedergabe-Vollbildsequenz gemäß dem Speedfaktor die Bandbreitenzuweisung überschreiten würde; und
eine Vorrichtung (120), welche auf die Vorrichtung zur Bestimmung, ob die schnelle Bildaufbereitung des AV-Datenstroms in einer ursprünglichen Wiedergabe-Vollbildsequenz gemäß dem Speedfaktor die Bandbreitenzuweisung überschreiten würde, anspricht, um die ursprüngliche Wiedergabe-Vollbildsequenz als die Schnellwiedergabe-Vollbildsequenz auszuwählen.

17. Gerät nach Anspruch 15, welches des Weiteren Folgendes aufweist:
eine Vorrichtung (120) zur Bestimmung, ob die schnelle Bildaufbereitung des AV-Datenstroms in einer ursprünglichen Wiedergabe-Vollbildsequenz gemäß dem Speedfaktor die Bandbreitenzuweisung überschreiten würde; und
eine Vorrichtung (120), welche auf die Vorrichtung zur Bestimmung, ob die schnelle Bildaufbereitung des AV-Datenstroms in einer ursprünglichen Wiedergabe-Vollbildsequenz gemäß dem Speedfaktor die Bandbreitenzuweisung überschreiten würde, anspricht, um die Schnellwiedergabe-Vollbildsequenz basierend auf mindestens einem der folgenden Ereignisse auszuwählen: (i) Fallenlassen mindestens einer ersten Kategorie von Vollbildern aus der ursprünglichen Wiedergabe-Vollbildsequenz, und (ii) Wiederholen einer Vielzahl von Vollbildern einer zweiten Kategorie von Vollbildern aus der ursprünglichen Wiedergabe-Vollbildsequenz.

18. Gerät nach Anspruch 17, **dadurch gekennzeichnet, dass** alle Vollbilder erster Klasse und alle Vollbilder zweiter Klasse aus der Gruppe bestehend aus intracodierten MPEG-Vollbildern, prädiktiven MPEG-Vollbildern und bidirektional-prädiktiven Vollbildern ausgewählt werden (601).

19. Gerät nach Anspruch 15, **dadurch gekennzeichnet, dass** die Schnellwiedergabe-Vollbildsequenz auf einer Löschung (621) einer Vielzahl bidirektiorial-prädiktiver MPEG-Vollbilder aus einer ursprünglichen Wiedergabe-Vollbildsequenz basiert.

20. Gerät nach Anspruch 19, **dadurch gekennzeichnet, dass** die Schnellwiedergabe-Vollbildsequenz zusätzlich auf einer Wiederholung (621) zumindest eines intracodierten MPEG-Vollbilds der ursprünglichen Wiedergabe-Vollbildsequenz anstelle der Vielzahl prädiktiver MPEG-Vollbilder basiert.

21. Gerät nach Anspruch 19, **dadurch gekennzeichnet, dass** die Schnellwiedergabe-Vollbildsequenz zusätzlich auf einer Löschung (641) mindestens eines intracodierten MPEG-Vollbilds aus der ursprünglichen Wiedergabe-Vollbildsequenz und einer Wiederholung eines vorhergehenden intracodierten MPEG-Vollbilds anstelle des mindestens einen intracodierten Vollbilds basiert.

22. Gerät nach Anspruch 15, welches des Weiteren Folgendes aufweist:
eine Vorrichtung (120) zur Erfassung einer Veränderung der Eigenschaften des AV-Datenstroms; und
eine Vorrichtung (120) zur Neubestimmung der Schnellwiedergabe-Vollbildsequenz, welche dem AV-Datenstrom zugehörig ist, basierend auf der Bandbreitenzuweisung, der Benutzeranfrage und der erfassten Veränderung der Eigenschaften des AV-Datenstroms.

23. Gerät nach Anspruch 22, **dadurch gekennzeichnet, dass** die Vorrichtung (120) zur Erfassung einer Veränderung ihren Betrieb basierend auf einer Extraktion von Codierparametern des AV-Datenstroms durchführt.

24. Gerät nach Anspruch 22, **dadurch gekennzeichnet, dass** die Vorrichtung (120) zur Erfassung einer Veränderung ihren Betrieb basierend auf Informationen bezüglich dem von einer Datenbank erhaltenen AV-Datenstrom durchführt.

## Revendications

1. Procédé permettant de fournir un rendu rapide d'un contenu numérique en transmission continue dans un réseau domestique, le procédé comprenant les étapes consistant à:
recevoir (810) au niveau d'un serveur multimédia, une allocation de bande-passante d'un gestionnaire de ressources pour un flux de données AV;
recevoir (830) une demande d'utilisateur concernant un rendu rapide du flux de données AV, où la demande d'utilisateur inclut un facteur de vitesse; **caractérisé par**
déterminer (840) une séquence de trames de lecture rapide associée au flux de données AV d'après l'allocation de bande-passante et la demande d'utilisateur.

2. Procédé selon la revendication 1, comprenant de plus l'étape consistant à transmettre (850) le flux de données AV en conformité avec la séquence de trames de lecture rapide de l'étape de détermination.

3. Procédé selon la revendication 2, dans lequel la détermination comprend les étapes consistant à:
déterminer (910) si le rendu rapide du flux de données AV dans une séquence de trames de lecture d'origine en conformité avec le facteur de vitesse excède ou non l'allocation de bande passante; et
en réponse à l'étape consistant à déterminer (910) si le rendu rapide du flux de données AV dans la séquence de trames de lecture d'origine en conformité avec le facteur de vitesse excède ou non l'allocation de bande-passante, sélectionner (920) la séquence de trames de lecture d'origine en tant que séquence de trames de lecture rapide.

4. Procédé selon la revendication 2, dans lequel la détermination comprend les étapes consistant à:
déterminer (910) si le rendu rapide du flux de données AV dans une séquence de trames de lecture d'origine en conformité avec le facteur de vitesse excède ou non l'allocation de bande passante; et
en réponse à l'étape consistant à déterminer (910) si le rendu rapide du flux de données AV dans la séquence de trames de lecture d'origine en conformité avec le facteur de vitesse excède ou non l'allocation de bande-passante, sélectionner (940) la séquence de trames de lecture rapide d'après au moins un élément parmi: (i) l'abandon (621) d'au moins une première classe de trames de la séquence de trames de lecture d'origine, et (ii) la répétition (641) d'une pluralité de trames d'une deuxième classe de trames provenant de la séquence de trames de lecture d'origine.

5. Procédé selon la revendication 4, dans lequel chacune de la première classe de trames et de la deuxième classe de trames est choisie (601) dans le groupe constitué par des trames MPEG intracodées, des trames MPEG prédictives et des trames MPEG prédictives bidirectionnelles.

6. Procédé selon la revendication 2, dans lequel la séquence de trames de lecture rapide est basée sur la suppression (621) d'une pluralité de trames MPEG prédictives bidirectionnelles provenant d'une séquence de trames de lecture d'origine.

7. Procédé selon la revendication 6, dans lequel la séquence de trames de lecture rapide est de plus basée sur la suppression (621) d'une pluralité de trames MPEG prédictives provenant de la séquence de trames de lecture d'origine.

8. Procédé selon la revendication 7, dans lequel la séquence de trames de lecture rapide est de plus basée sur la répétition (621) d'au moins une trame MPEG intracodée de la séquence de trames de lecture d'origine à la place de la pluralité de trames MPEG prédictives.

9. Procédé selon la revendication 7, dans lequel la séquence de trames de lecture rapide est de plus basée sur la suppression (621) d'au moins une trame MPEG intracodée provenant de la séquence de trames de lecture d'origine et la répétition d'une trame MPEG intracodée précédente à la place de la au moins une trame intracodée.

10. Procédé selon la revendication 2, comprenant en outre, après l'étape de détermination, les étapes consistant à:
détecter (842) un changement des caractéristiques du flux de données AV; et
re-déterminer (844) la séquence de trames de lecture rapide associée au flux de données AV d'après l'allocation de bande-passante, la demande d'utilisateur et le changement détecté des caractéristiques du flux de données AV.

11. Procédé selon la revendication 10, dans lequel l'étape de détection est réalisée d'après l'extraction de paramètres d'encodage de flux du flux de données AV.

12. Procédé selon la revendication 10, dans lequel l'étape de détection est réalisée d'après des informations concernant le flux de données AV obtenues à partir d'une base de données.

13. Support de stockage lisible par ordinateur incorporant un code de logiciel agencé pour exécuter toutes les étapes de l'une quelconque des revendications précédentes.

14. Appareil permettant de fournir un rendu rapide d'un contenu numérique en transmission continue dans un réseau domestique, l'appareil comprenant:
un moyen (120) permettant de recevoir, d'un gestionnaire de ressources, une allocation de bande-passante pour un flux de données AV;
un moyen (120) permettant de recevoir une demande d'utilisateur concernant un rendu rapide du flux de données AV, où la demande d'utilisateur inclut un facteur de vitesse; et **caractérisé par**
un moyen (120) permettant de déterminer une séquence de trames de lecture rapide associée au flux de données AV d'après l'allocation de bande-passante et la demande d'utilisateur.

15. Appareil selon la revendication 14, comprenant de plus un moyen (120) permettant de transmettre le flux de données AV en conformité avec la séquence de trames de lecture rapide de l'étape de détermination.

16. Appareil selon la revendication 15, comprenant en outre:
un moyen (120) pour déterminer si le rendu rapide du flux de données AV dans une séquence de trames de lecture d'origine en conformité avec le facteur de vitesse excéderait ou non l'allocation de bande passante; et
un moyen (120) permettant, en réponse au moyen pour déterminer si le rendu rapide du flux de données AV dans une séquence de trames de lecture d'origine en conformité avec le facteur de vitesse excède ou non l'allocation de bande-passante, de sélectionner la séquence de trames de lecture d'origine comme la séquence de trames de lecture rapide.

17. Appareil selon la revendication 15, comprenant en outre:
un moyen (120) pour déterminer si le rendu rapide du flux de données AV dans une séquence de trames de lecture d'origine en conformité avec le facteur de vitesse excède ou non l'allocation de bande passante; et
un moyen (120) permettant, en réponse au moyen pour déterminer si le rendu rapide du flux de données AV dans une séquence de trames de lecture d'origine en conformité avec le facteur de vitesse excède ou non l'allocation de bande-passante, de sélectionner la séquence de trames de lecture rapide sur la base d'au moins un élément parmi: (i) l'abandon d'au moins une première classe de trames de la séquence de trames de lecture d'origine, et (ii) la répétition d'une pluralité de trames d'une deuxième classe de trames de la séquence de trames de lecture d'origine.

18. Appareil selon la revendication 17, dans lequel chacune de la première classe de trames et de la deuxième classe de trames est choisie (601) dans le groupe constitué par des trames MPEG intracodées, des trames MPEG prédictives et des trames MPEG prédictives bidirectionnelles.

19. Appareil selon la revendication 15, dans lequel la séquence de trames de lecture rapide est basée sur une suppression (621) d'une pluralité de trames MPEG prédictives bidirectionnelles provenant d'une séquence de trames de lecture d'origine.

20. Appareil selon la revendication 19, dans lequel la séquence de trames de lecture rapide est de plus basée sur la répétition (621) d'au moins une trame MPEG intracodée de la séquence de trames de lecture d'origine à la place de la pluralité de trames MPEG prédictives.

21. Appareil selon la revendication 19, dans lequel la séquence de trames de lecture rapide est de plus basée sur la suppression (641) d'au moins une trame MPEG intracodée provenant de la séquence de trames de lecture d'origine et la répétition d'une trame MPEG intracodée précédente à la place de la au moins une trame intracodée.

22. Appareil selon la revendication 15, comprenant en outre:
un moyen (120) permettant de détecter un changement des caractéristiques du flux de données AV; et
un moyen (120) permettant de re-déterminer la séquence de trames de lecture rapide associée au flux de données AV d'après l'allocation de bande-passante, la demande d'utilisateur et le changement détecté des caractéristiques du flux de données AV.

23. Appareil selon la revendication 22, dans lequel le moyen (120) permettant de détecter un changement effectue son opération en se basant sur l'extraction de paramètres d'encodage de flux du flux de données AV.

24. Appareil selon la revendication 22, dans lequel le moyen (120) permettant de détecter un changement effectue son opération en se basant sur des informations concernant le flux de données AV obtenues à partir d'une base de données.
